(19) Europäisches Patentamt
European Patent Office
Office européen des brevets

(11) **EP 2 490 549 B1**

(12) **EUROPEAN PATENT SPECIFICATION**

(45) Date of publication and mention
of the grant of the patent:
**07.08.2013 Bulletin 2013/32**

(51) Int Cl.:
*A23F 3/06* (2006.01)      *A23F 3/08* (2006.01)
*A23F 3/20* (2006.01)

(21) Application number: **10763380.2**

(86) International application number:
**PCT/EP2010/065288**

(22) Date of filing: **12.10.2010**

(87) International publication number:
**WO 2011/047991 (28.04.2011 Gazette 2011/17)**

(54) **PROCESS FOR MANUFACTURING LEAF TEA**

VERFAHREN ZUR HERSTELLUNG VON BLATTTEE

PROCÉDÉ DE FABRICATION DE THÉ À PARTIR DE FEUILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2009 EP 09173477**

(43) Date of publication of application:
**29.08.2012 Bulletin 2012/35**

(73) Proprietors:
• **Unilever PLC**
**London EC4Y 0DY (GB)**
Designated Contracting States:
**CY GB IE MT**
• **Unilever NV**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
• **SHARP, David, George**
**Bedfordshire MK44 1LQ (GB)**
• **SMITH, Alistair, David**
**Bedfordshire MK44 1LQ (GB)**

(74) Representative: **Clarke, Christopher John**
**Unilever PLC**
**Unilever Patent Group**
**Colworth House**
**Sharnbrook**
**Bedford**
**Bedfordshire MK44 1LQ (GB)**

(56) References cited:
WO-A1-01/82713          WO-A1-2009/098231
WO-A2-2009/059927

• **DATABASE WPI Week 198546 Thomson Scientific, London, GB; AN 1985-288083 XP002573444 & SU 1 153 873 A1 (GEOR SUBTROPICAL) 7 May 1985 (1985-05-07) cited in the application**

Description

TECHNICAL FIELD OF THE INVENTION

The present invention relates to leaf tea. More particularly the present invention relates to a process which allows for the manufacture of fermented leaf tea products with improved quality.

BACKGROUND TO THE INVENTION

Beverages based on the tea plant *(Camellia sinensis)* have been popular throughout the world for many hundreds of years. Traditionally such beverages are produced by infusing leaf tea in hot water.

Leaf tea is generally prepared as green leaf tea or black leaf tea. The method of preparing such teas is well known to those skilled in the art. Generally, to prepare black leaf tea, fresh leaves of the plant *Camellia sinensis* are withered (subjected to mild drying), macerated, fermented (in which process enzymes in the tea use atmospheric oxygen to oxidise various substrates to produce brown-coloured products) and then fired (to dry the tea leaves and deactivate the enzymes). Green leaf tea is not exposed to the fermentation process. Partial fermentation may be used to produce intermediate-type teas known as "oolong" tea.

Leaf tea is usually sold to the trade by auction wherein the highest quality teas demand the highest prices. The quality of leaf tea is usually judged by expert tea tasters who score the tea, amongst other factors, on the appearance of the leaf tea and the taste of an infusion prepared from the leaf tea.

Furthermore, consumers of tea are constantly looking for foods and beverages that provide new sensory experiences.

Thus there is a need to provide leaf teas which have improved quality and / or produce beverages having unique organoleptic properties. We have now found that this need may be met by a process wherein tea juice is expressed from tea leaves and the juice is then added back to the leaf residue.

WO 2009 / 059927 discloses a process comprising the steps of: providing fresh tea leaves comprising catechins; macerating the fresh tea leaves thereby to produce dhool; fermenting the dhool for a fermentation time sufficient to reduce the content of catechins in the dhool to less than 50% of the content of catechins in the fresh tea leaves prior to maceration on a dry weight basis; and then expressing juice from the fermented dhool thereby to produce leaf residue and tea juice, wherein the amount of expressed juice is at least 50 ml per kg of the fresh tea leaves.

GB 0 593 260 (Eric Howard Gridley) discloses a process wherein picked leaf is frozen without being withered and the frozen leaf is then tumbled in air until it has thawed. After removal from the drum the leaf is placed in a machine which removes the desired amount of juice. Orthodox manufacture is now proceeded with and the removed juice may be sprayed on to the leaves after fermenting and before firing. Thus in the process of GB 0 593 260 the juice is expressed before fermentation and is only added back after fermentation.

SU 1,153,873 A (Georgian Institute of Subtropical Agriculture) discloses a process for the production of black tea, in which the tea leaves are withered, cut, curled, fermented, and expressed to obtain a juice, which is then applied to the extracted leaves and the latter are finally dried, characterized in that, in order to improve the quality of tea when using a raw material with an elevated amount of coarse and coarsened leaves, the tea leaves are pressed immediately after the cutting operation and the compression is continued until the amount of juice obtained is equal to one-third of the amount of mass of comminuted leaves, and the extracted leaves are fermented, after which they are curled, and the juice, cooled to 0-4°C, is applied to them. Thus in the process of SU 1,153,873 A the juice is expressed before fermentation and is only added back after fermentation.

SU 929,041 B (Georgian Polytechnical Institute) discloses a process for manufacturing black tea wherein a coarse fraction obtained in a sorting stage is crushed in a press operating with an endless screw. The crushed mass of leaves and the juice separating out are mixed for 20 minutes and then fermented and dried. Thus in the process of SU 929,041 B the juice is expressed before the fermentation step.

We have found that juice expressed before fermentation imparts unwanted bitter taste to fermented leaf products made therefrom and results in teas that can be too pale for consumers familiar with black tea.

DEFINITIONS

Tea

"Tea" for the purposes of the present invention means material from *Camellia sinensis* var. *sinensis* and/or *Camellia sinensis* var. *assamica.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have a water content in the range 60 to 90%.

"Dhool" refers to macerated fresh tea leaves.

CTC

"CTC" comes from the words "crush, tear and curl". CTC machines and processes are well-known to those skilled in black tea manufacture (see, for example, "Tea: Cultivation to Consumption", K.C. Willson and M.N. Clifford (Eds), 1st Edn, 1992, Chapman & Hall (London), Chapter 14, pp. 483-485. Where reference is made to at least one CTC process, this means at least one pass through a pair of CTC rollers.

Expressing Juice

As used herein the term "expressing juice" refers to squeezing out juice from dhool using physical force, as opposed to extraction of tea solids with the use of a solvent. Thus the term "expressing" encompasses such means as squeezing, pressing, wringing, spinning and extruding. It is possible (although not preferred) that a small amount of solvent (e.g. water) is added to the dhool during the expression step. However, in order to prevent significant extraction of tea solids by the solvent, the moisture content of the dhool during expression is that of fresh tea leaves as defined hereinabove. In other words, during the expression step, the moisture content of the dhool is between 30 and 90% by weight, more preferably between 60 and 90%. It is also preferred that the fresh leaves and/or dhool are not contacted with non-aqueous solvent (e.g. alcohols) prior to or during expression, owing to the environmental & economic problems associated with such solvents.

Catechins

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof.

Determination of Catechins and Caffeine in Tea Leaves or Dhool

For fresh tea leaves, the leaves are steamed to prevent fermentation and then dried to yield green leaf tea. For dhool, the dhool is fired to arrest fermentation and yield leaf tea. The amounts of catechins and caffeine in the leaf tea are then determined simultaneously by reverse-phase HPLC as follows.

*Sample Preparation*

1. Grind the leaf tea using a Cyclotech™ 1093 sample mill (FOSS Ltd, Warrington, Cheshire, UK) fitted with a 0.5 $\mu$m screen, until a fine powder is achieved.

2. Weigh accurately approximately 200 mg of the ground tea into an extraction tube, and record the mass.

3. Warm at least 20 ml of a methanol-water solution (70% v/v methanol in distilled water) to 70°C.

4. Add 5 ml of the hot methanol-water solution to the extraction tube. Gently mix the methanol-water and tea material on a vortex mixer; place in a water bath at 70°C for 5 minutes; mix again and then place in a water bath at 70°C for a further 5 minutes.

5. Gently mix the methanol-water and tea material on a vortex mixer again and then allow too cool for a 10 minutes at an air temperature of 20°C.

6. Centrifuge the extraction tube at a relative centrifugal force (RCF) of 2900 g for 10 minutes.

7. The extraction tube should now contain a liquid supernatant on top of a plug of tea material. Carefully decant supernatant into a clean graduated test tube.

8. Add 5 ml of the hot methanol-water solution to the plug in the extraction tube. Gently mix the methanol-water and tea material on a vortex mixer; place in a water bath at 70°C for 5 minutes; mix again and then place in a water bath at 70°C for a further 5 minutes.

9. Gently mix the methanol-water and tea material on a vortex mixer again and then allow too cool for a 10 minutes at an air temperature of 20°C.

10. Centrifuge the extraction tube at a RCF of 2900 g for 10 minutes.

11. The extraction tube should now contain a liquid supernatant on top of a plug of tea material. Carefully decant supernatant into the graduated test tube containing the supernatant from step 7.

12. Make up the pooled supernatants to 10 ml with the methanol-water solution.

13. Add 1 ml of a solution of 2.5 mg/ml EDTA and 2.5 mg/ml ascorbic acid in distilled water to the graduated test tube.

14. Dilute 1 part of the pooled supernatant mixture with 4 parts (by volume) of 10% acetonitrile stabiliser solution (10% v/v acetonitrile, 0.25 mg/ml ascorbic acid and 0.25 mg/ml EDTA in distilled water).

15. Decant the diluted pooled supernatant mixture into microcentrifuge tubes and centrifuge in a bench top centrifuge at a RCF of 14000 g for 10 minutes.

*HPLC Analysis conditions*

|  |  |
|---|---|
| **Column:** | Luna Phenyl hexyl 5µ, 250 x 4.60 mm |
| **Flow rate:** | 1 ml/min |
| **Oven temperature:** | 30°C |
| **Solvents:** | A: 2% acetic acid in acetonitrile |
|  | B: 2% acetic acid and 0.02 mg/ml EDTA in water |
| **Injection volume:** | 10 µl |

**Gradient:**

| Time | % Solvent A | % Solvent B | Step |
|---|---|---|---|
| 0 to 10 min | 5 | 95 | Isocratic |
| 10 to 40 min | 5 - 18 | 95 - 85 | Linear gradient |
| 40 to 50 min | 18 | 82 | Isocratic |
| 50 to 55 min | 50 | 50 | Wash |
| 55 to 75 min | 5 | 95 | Isocratic |

**Quantification:** Peak area relative to a calibration curve constructed daily. Calibration curve is constructed from caffeine and the concentration of catechins is calculated using the relative response factors of the individual catechins to caffeine (from the ISO catechin method - ISO/CD 14502-2). Individual caffeine standards (Sigma, Poole, Dorset, UK) are used as peak identification markers.

Miscellaneous

Except in the examples, or where otherwise explicitly indicated, all numbers in this description indicating amounts of material or conditions of reaction, physical properties of materials and/or use may optionally be understood as modified by the word "about".

All amounts are by weight of the final composition, unless otherwise specified.

It should be noted that in specifying any range of concentration or amount, any particular upper concentration can be associated with any particular lower concentration or amount.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

## SUMMARY OF THE INVENTION

In a first aspect the present invention provides a process for manufacturing leaf tea, the process comprising the steps of:

a) providing a supply of fresh tea leaves comprising catechins;
b) macerating the fresh tea leaves to produce dhool;
c) fermenting the dhool for a first fermentation time ($t_1$) sufficient to reduce the content of catechins in the dhool to less than 50% of the content of catechins in the fresh tea leaves prior to maceration on a dry weight basis, before expressing juice from the dhool thereby to produce leaf residue and tea juice;
d) contacting at least part of the tea juice with at least part of the leaf residue to provide a tea mixture; and then
e) drying the tea mixture to produce the leaf tea.

We have found that such a process allows for the manufacture of fermented leaf tea products with high appearance scores when judged by expert tea tasters. Furthermore, the use of juice which has been expressed only after a significant proportion of the catechins have been oxidised helps ensure that the tea appearance is sufficiently dark and also helps avoid excessive bitterness in beverages made from the final leaf tea.

In a second aspect the present invention provides leaf tea products obtained by the process.

## DETAILED DESCRIPTION

Providing Fresh Tea Leaves

Step (a) of the process of the invention comprises providing a supply of fresh tea leaves comprising catechins.

It is particularly preferred that the fresh tea leaves comprise material from var. *assamica* as this variety naturally has a high level of tea actives. Most preferably the fresh leaves are fresh leaves from var. *assamica.*

The fresh tea leaves are preferably provided in freshly plucked form, i.e. without any further processing. The fresh tea leaves preferably comprise actively growing buds, e.g. in the form of the first two or three leaves together with the unopened bud (so-called "two-and-a-bud" and/or "three-and-a-bud" material).

The fresh tea leaves may be withered prior to step (b). If so, the tea leaves are typically withered for about 12 to 36 hours. Withering allows certain chemical and biochemical changes to occur and also reduces the moisture content of the leaves to around 35 to 75%. The biochemical and/or chemical changes taking place during withering may increase the yield of the volatile flavour compounds in tea.

The present invention is found to work well with fresh leaves with or without any special pre-treatment. Thus it is preferred that the leaves have not undergone a freeze-thaw process prior to step (b) and/or step (c).

Furthermore, in order to allow fermentation to occur without the use of exogenous enzymes, it is preferred that the fresh tea leaves have not been heat-treated in order to deactivate the endogenous fermentation enzymes.

Macerating the Fresh Tea Leaves

Step (b) of the process of the invention comprises macerating the fresh tea leaves thereby to produce dhool.

Maceration involves wounding the leaves e.g. by rolling and/or crushing the leaves i.e. to break down the plant tissue structure. In black tea manufacture this has the effect of liberating fermentable substrates and fermenting enzymes from within the plant cells and tissue. The maceration is preferably achieved by passing the fresh tea leaves through a cutting machine. Thus for the purpose of the invention the fresh tea leaves may be macerated by a maceration process using, for example, a CTC machine, rotorvane, ball mill, grinder, hammer mill, Lawri tea processor, Legg cutting machine, or tea rollers as in orthodox tea processing. Combinations of these maceration processes may also be used.

The process of the invention is found to be especially suitable to improving the quality of teas which have undergone a CTC process. The quality, and therefore the auction price of black CTC tea is closely linked with leaf appearance. In particular good black colour, uniform particle size and lack of irregular "fibres" are associated with quality black CTC teas, and we have found that the process of the present invention can be used to improve such features. Thus, maceration of the fresh tea leaves in step (b) preferably comprises passing the fresh tea leaves through at least one CTC process.

Fermenting the Dhool Prior to Expression of Juice

Step (c) of the process of the invention comprises fermenting the dhool for a first fermentation time ($t_1$) before expressing juice from the dhool.

The degree of fermentation is conveniently judged by the proportion of oxidised catechins. In particular, one can measure a quantity, $C_0$, which is the amount of catechins in the fresh tea leaves prior to maceration in percent by dry weight of the fresh leaves. One can then measure a second quantity, $C_1$, which is the amount of catechins in the dhool after the first fermentation time, $t_1$, in percent by dry weight of the dhool. One can then use these values to calculate the degree of fermentation, R, as the content of catechins in the dhool at $t_1$ as a percentage of the content of catechins in the fresh tea leaves prior to maceration on a dry weight basis. In other words, the degree of fermentation can be calculated as follows:

$$R(\%) \ = \ 100 C_1 / C_0,$$

such that for negligible fermentation R = 100% and for complete fermentation R = 0%.

We have found that fermentation for a time ($t_1$) sufficient to reduce the content of catechins in the dhool to less than 50% of the content of catechins in the fresh tea leaves prior to maceration on a dry weight basis (i.e. R < 50%) results in tea juice which can be combined with leaf residue to give superior properties to the final leaf tea than those which result from juice which is expressed at a lower degree of fermentation. In particular, the greater the degree of fermentation (lower R), the darker the appearance of the leaf tea and the less bitter the taste of infusions prepared therefrom. Preferably, $t_1$ is sufficient to reduce the amount of catechins in the dhool to less than 40% (i.e. R < 40%), more preferably less than 30%, and most preferably from 25 to 0% of the content of catechins in the fresh tea leaves prior to maceration on a dry weight basis.

Examples of expression of juice from dhool after various degrees of fermentation determined in this way can be found in our copending international patent application published as WO 2009/059927.

Expression of Juice

Step (c) of the process of the invention comprises expressing juice from the fermented dhool thereby to produce leaf residue and tea juice.

If the amount of juice expressed is too low then it becomes difficult to separate the juice from the leaf residue and/or leads to an inefficient process. Thus it is preferred that the amount of expressed juice is at least 50 ml per kg of the fresh tea leaves, more preferably at least 100 ml, more preferably still at least 150 ml and most preferably at least 200 ml. When referring to the volume of juice expressed per unit mass of tea leaves it should be noted that the mass of the tea leaves is expressed on an "as is" basis and not a dry weight basis. Thus the mass includes any moisture in the leaves.

It is also advantageous to limit the amount of juice expressed as this limits damage to the residual leaf. Thus it is preferred that the amount of expressed juice is less than 800 ml per kg of fresh leaves, more preferably less than 500 ml.

The expression step can be achieved in any convenient way so long as it allows for separation of the tea juice from the leaf residue. The machinery used to express the juice may, for example, include a hydraulic press, a pneumatic press, a screw press, a belt press, an extruder or a combination thereof.

The juice may be obtained from the dhool in a single pressing or in multiple pressings of the dhool. Preferably the juice is obtained from a single pressing as this allows for a simple and rapid process.

In order to minimise degradation of the valuable tea compounds, it is preferred that the expression step is performed at ambient temperature. For example, the dhool temperature may be from 5 to 40°C, more preferably 10 to 30°C.

The time and pressure used in the expression step can be varied to yield the required amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Providing the Tea Mixture

Step (d) of the process of the invention comprises contacting at least part of the tea juice with at least part of the leaf residue to provide a tea mixture.

The tea juice may be combined with the leaf residue in any amount. We have found however, that acceptable tea products can be prepared when the tea juice is combined with the leaf residue in substantially the same proportion as resulted from the expression step. This has the additional advantage that leaf teas may be manufactured which have substantially the same overall chemical composition as a conventional leaf tea but which have superior appearance.

By "combined with the leaf residue in substantially the same proportion as resulted from the expression step" is meant that there is a first weight ratio ($W_E$) of the amount of tea juice expressed in step (c) to the amount of the leaf residue, and there is a second weight ratio ($W_C$) of the amount of the at least part of the tea juice contacted with the at least part of the leaf residue in step (d), and the two ratios are substantially the same on a dry weight basis.

For example, fresh leaves may undergo an expression step to yield an amount of tea juice having a dry mass $J_E$ and an amount of leaf residue having a dry mass $L_E$. A portion of the juice having a dry mass $J_C$ is then combined with a portion of the residue having a dry mass $L_C$. The ratio $W_E/W_C$ is then calculated as follows:

$$W_E : W_C \;=\; (J_E/L_E)\,/\,(J_C/L_C) \;=\; (J_E L_C)\,/\,(L_E J_C)\,.$$

The ratio ($W_E:W_C$) of the first weight ratio to the second weight ratio is preferably between 2:1 to 1:2, more preferably between 1.5:1 to 1:1.5 and most preferably between 1.1:1 to 1:1.1.

The tea juice may be combined with the leaf residue without any processing of the juice following expression. Alternatively, for example, the juice may be subjected to a concentration and/or dilution step prior to the combination step.

Preferably the tea juice and leaf residue are combined in a manner to allow intimate mixing of the juice and residue. For example, the juice may be sprayed onto the leaf residue and/or the juice and residue may be combined in a mixing device which mechanically agitates the tea mixture. In any case it is preferred that an equilibration time is allowed for the leaf residue to reabsorb the juice prior to drying. In particular it is preferred that the time between forming the tea mixture and drying thereof is at least 2 minutes, more preferably at least 5 minutes and most preferably between 10 minutes and 1 hour.

Fermentation of the Leaf Residue

To provide leaf tea products with especially dark appearance it may be desirable to continue to ferment the leaf residue after the expression step. Furthermore we have found that novel and interesting flavour profiles can be imparted to the final leaf tea by varying the relative degree to which fermentation is employed before and after the expression step.

Thus, in a preferred embodiment the leaf residue is fermented for a second fermentation time ($t_2$) between steps (c) and (d).

The exact time required to produce the desired degree of fermentation will depend, amongst other things, on the temperature of the dhool, the degree of maceration of the dhool and the supply of oxygen to the dhool. Typically, however, the total fermentation time ($t_F$), being the sum of the first and second fermentation times ($t_1 + t_2$), is at least 60 minutes, more preferably between 90 and 240 minutes, and most preferably between 100 and 180 minutes.

The start of fermentation can be said to be the time at which a significant portion of the catechins in the dhool have begun to oxidise. In particular, the start of fermentation can be conveniently defined as that time when the content of catechins in the dhool falls below 90% of the content of catechins in the fresh tea leaves prior to maceration on a dry weight basis. For efficient maceration processes, such as CTC processes, this time is typically immediately after the earliest maceration step.

Teas with delicate, fresh floral flavours can be produced by expressing the juice after only partial fermentation and then combining it with more fully fermented residue. Thus, in one embodiment it is preferred that the first fermentation time ($t_1$) is between 20 and 70% of the total fermentation time ($t_F$), more preferably between 30 and 60%.

Alternatively, teas which have a more traditional black tea flavour but which still have the enhanced appearance afforded by the invention can be produced by expressing the juice after the fermentation is relatively complete. Thus, in another embodiment the first fermentation time ($t_1$) is greater than 70% of the total fermentation time ($t_F$), more preferably at least 80%, and most preferably from 90 to 100%.

The preferred fermentation temperature is from 10 to 40°C, more preferably from 15 to 25°C. Too low a temperature results in a slow rate of fermentation whilst too high a temperature may result in deactivation of oxidative enzymes and/or generation of unwanted reaction products.

Drying the Tea Mixture

Step (e) of the process of the invention comprises drying the tea mixture to produce the leaf tea.

Typically the tea mixture will be "fired", i.e. subjected to high temperatures in order to simultaneously remove moisture and deactivate the fermentation enzymes. Suitable drying processes are well know to those in the art of leaf tea manufacture and most involve the use of hot air, for example in fluid-bed drying. The drying removes sufficient moisture to yield leaf tea and thus reduces the moisture content of the tea mixture to that of leaf tea (i.e., moisture content of less than 30% by weight, preferably to from 1 to 10% by weight).

## EXAMPLES

The present invention will be further described with reference to the following examples.

Example 1

This Example demonstrates the effect of the process of the invention on the appearance of the final black leaf tea.

*Production of Dhool*

Fresh Kenyan tea leaves of *Camellia sinensis* var. *assamica* were used. The leaves were withered to a moisture content in the range 71-72% and then cut and passed through a rotorvane followed by one pass through a CTC machine with 8 teeth per inch (TPI). The dhool was then fermented for 1 hour.

*Comparative Product A (Conventional Leaf Tea)*

A portion of the 1-hour fermented dhool was subjected to a mid fermentation cut using 3 passes through the CTC machine. After this cut the dhool was fermented for a further 1 hour before being dried in a fluid bed drier to a moisture content of less than 5% to produce Comparative Product A.

*Comparative Product B (Leaf Tea from Residual Leaf Only)*

Another portion of the 1-hour fermented dhool was passed though a screw press (model CP12 manufactured by the Vincent Corporation). The feed rate was approximately 2500 kg/hr using a screw speed of 12 rpm and a pneumatically controlled back-pressure conical device set at 3 bar.
The pressing process resulted in the generation of two streams: a residual leaf stream and a juice stream.
The juice was collected and stored at ambient temperature (~25°C) until required.
The residual leaf was collected and subjected to the same mid fermentation cut and 1 hour fermentation as for Comparative Product A. A portion of the cut residual leaf was then dried in the fluid bed drier to a moisture content of less than 5% to produce Comparative Product B.

*Example Product C (Leaf Tea Manufactured According to the Invention)*

The remainder of the cut residual leaf was mixed with some of the stored juice. The juice was added back to the leaf residue in the same proportion that it had been originally expressed and the resulting mixture was stirred by hand. The mixture was then dried in the fluid bed drier to a moisture content of less than 5% to yield Example Product C.

*Leaf Appearance*

The 3 products generated were then assessed blind for the quality of the leaf appearance by expert tea assessors. The scale was that which is routinely used for assessment of CTC black tea, with a higher score indicating a higher quality appearance as follows:

Score of 1-3 = Off-grade (high content of stalk/fibre);
Score of 4 = Poor Main Grade;
Score of 5 = Fair Main Grade;
Score of 6 = Good Main Grade (Good cleanness, blackness and uniformity).

*Results*

The results for the three samples are given in the following table:

| Sample | Appearance Score |
|---|---|
| Comparative Product A | 5 |
| Comparative Product B | 4 |
| Example Product C | 6 |

It is apparent from this data that leaf tea made using the process of the invention had superior appearance to conventional leaf tea or leaf tea made using only the residual leaf from pressing.

Example 2

This Example demonstrates the effect of expressing the juice at different times during fermentation on the properties of the final leaf tea.

*Production of Dhool*

Fresh Kenyan tea leaves of *Camellia sinensis* var. *assamica* were withered and macerated to produce dhool.

*Expression of Juice*

Pressing was done using a hydraulic press (5 tonnes applied to a 500 g mass of dhool inside a cylinder of diameter 160 mm, resulting in a downward pressure of 354 psi (2.44 MPa)). The expressed juice was filtered through a 0.2 micron filter immediately after expression.

*Combination of Juice with Residual Leaf*

In each case 40 ml of juice was added to 50 g of residual leaf. The resulting mixture was stirred by hand and allowed to equilibrate for 30 minutes before fluid bed drying.

*Fermentation and Pressing Time*

The dhool was split into 3 batches immediately after maceration.
Batch 1 was pressed immediately after maceration. The residual leaf was then fermented for 2 hours before combining with the juice. The leaf tea resulting from fluid bed drying of this mixture is referred to as Comparative Product D.
Batch 2 was fermented for 1 hour and then pressed. The residual leaf was then fermented for a further 1 hour before combining with the juice. The leaf tea resulting from fluid bed drying of this mixture is referred to as Example Product E.
Batch 3 was fermented for 2 hours and then pressed. The residual leaf was then immediately combined with the juice. The leaf tea resulting from fluid bed drying of this mixture is referred to as Example Product F.
The production processes are summarized in the following table:

| Sample | Fermentation Time of Dhool Before Pressing ($t_1$) / Hours | Fermentation Time of Residual Leaf After Pressing ($t_2$) / Hours | Total Fermentation Time ($t_F$) / Hours |
|---|---|---|---|
| Comparative Product D | 0 | 2 | 2 |
| Example Product E | 1 | 1 | 2 |
| Example Product F | 2 | 0 | 2 |

*Results*

2 g of each tea was infused in 200 ml of freshly boiled mineral water for 2 minutes and the resulting infusion tasted. The following comments were recorded.

• Comparative Product D was a bitter tasting product possibly due to the presence of higher levels of catechins than in the other samples.
• Example Product E gave a good balanced taste whilst retaining fresh floral notes.
• Example Product F gave a fresh taste with less floral character than Example Product E.

**Claims**

1. A process for manufacturing leaf tea, the process comprising the steps of:

   a) providing a supply of fresh tea leaves comprising catechins;
   b) macerating the fresh tea leaves to produce dhool;
   c) fermenting the dhool for a first fermentation time ($t_1$) sufficient to reduce the content of catechins in the dhool to less than 50% of the content of catechins in the fresh tea leaves prior to maceration on a dry weight basis, before expressing juice from the dhool thereby to produce leaf residue and tea juice;
   d) contacting at least part of the tea juice with at least part of the leaf residue to provide a tea mixture; and then
   e) drying the tea mixture to produce the leaf tea.

2. The process as claimed in claim 1 wherein the leaf residue is fermented for a second fermentation time ($t_2$) between steps (c) and (d) and there is a total fermentation time ($t_F$) which is the sum of the first and second fermentation times.

3. The process as claimed in claim 2 wherein the total fermentation time ($t_F$) is at least 60 minutes.

4. The process as claimed in claim 2 or claim 3 wherein the first fermentation time ($t_1$) is between 20 and 70% of the total fermentation time ($t_F$).

5. The process as claimed in claim 2 or claim 3 wherein the first fermentation time ($t_1$) is greater than 70% of the total fermentation time ($t_F$).

6. The process as claimed in any one of the preceding claims wherein $t_1$ is sufficient to reduce the amount of catechins in the dhool to less than 40% of the content of catechins in the fresh tea leaves on a dry weight basis.

7. The process as claimed in claim 6 wherein $t_1$ is sufficient to reduce the amount of catechins in the dhool to less than 30% of the content of catechins in the fresh tea leaves on a dry weight basis.

8. The process as claimed in any one of the preceding claims wherein the amount of expressed juice in step (c) is from 50 to 500 ml per kg of the fresh tea leaves.

9. The process as claimed in any one of the preceding claims wherein there is a first weight ratio ($W_E$) of the amount of tea juice expressed in step (c) to the amount of the leaf residue, and there is a second weight ratio ($W_C$) of the amount of the at least part of the tea juice contacted with the at least part of the leaf residue in step (d), and the two ratios are substantially the same on a dry weight basis.

10. The process as claimed in claim 9 wherein the ratio ($W_E:W_C$) of the first weight ratio to the second weight ratio is between 2:1 to 1:2.

11. The process as claimed in any one of the preceding claims wherein the leaf tea is black leaf tea.

12. The process as claimed in any one of the preceding claims wherein maceration of the fresh tea leaves in step (b) comprises passing the fresh tea leaves through at least one CTC process.

13. The process as claimed in any one of the preceding claims wherein the fresh tea leaves are withered prior to step (b).

14. A leaf tea obtained by the process of any one of claims 1 to 13.

**Patentansprüche**

1. Verfahren zum Herstellen von Blatttee,
   wobei das Verfahren die folgenden Schritte aufweist:

   (a) Bereitstellen einer Charge aus frischen Teeblättern, die Catechine aufweisen;
   (b) Rollen der frischen Teeblätter, um einen Dhool zu erzeugen;
   (c) Fermentieren des Dhools für eine erste Fermentierungszeit ($t_1$), die ausreicht, um den Catechingehalt im Dhool auf weniger als 50 % des Catechingehalts in den frischen Teeblättern vor dem Rollen zu verringern, und zwar auf das Trockengewicht bezogen, ehe Saft aus dem Dhool ausgepresst wird, wodurch Blattrückstände und Teesaft erzeugt werden;

(d) Inkontaktbringen von zumindest einem Teil des Teesaftes mit zumindest einem Teil der Blattrückstände, um ein Teegemisch bereitzustellen; und danach

(e) Trocknen des Teegemischs, um Blatttee zu erzeugen.

2. Verfahren nach Anspruch 1,
wobei die Blattrückstände zwischen den Schritten (c) und (d) für eine zweite Fermentierungszeit ($t_2$) fermentiert werden und es eine gesamte Fermentierungszeit ($t_F$) gibt, die die Summe der ersten und der zweiten Fermentierungszeit darstellt.

3. Verfahren nach Anspruch 2,
wobei die gesamte Fermentierungszeit ($t_F$) mindestens 60 min beträgt.

4. Verfahren nach Anspruch 2 oder 3,
wobei die erste Fermentierungszeit ($t_1$) zwischen 20 und 70 % der gesamten Fermentierungszeit ($t_F$) liegt.

5. Verfahren nach Anspruch 2 oder 3,
wobei die erste Fermentierungszeit ($t_1$) mehr als 70 % der gesamten Fermentierungszeit ($t_F$) beträgt.

6. Verfahren nach einem der vorstehenden Ansprüche,
wobei $t_1$ ausreicht, um die Catechinmenge im Dhool auf weniger als 40 % des Catechingehalts in den frischen Teeblättern zu verringern, und zwar auf das Trockengewicht bezogen.

7. Verfahren nach Anspruch 6,
wobei $t_1$ ausreicht, um die Catechinmenge im Dhool auf weniger als 30 % des Catechingehalts in den frischen Teeblättern zu verringern, und zwar auf das Trockengewicht bezogen.

8. Verfahren nach einem der vorstehenden Ansprüche,
wobei die Menge des im Schritt (c) ausgepressten Teesafts zwischen 50 bis 500 ml pro kg der frischen Teeblätter liegt.

9. Verfahren nach einem der vorstehenden Ansprüche,
wobei es ein erstes Gewichtsverhältnis ($W_E$) zwischen der Menge des im Schritt (c) ausgepressten Teesafts und der Menge der Blattrückstände und ein zweites Gewichtsverhältnis ($W_C$) der Menge von dem zumindest einen Teil des Teesaftes, der im Schritt (d) mit dem zumindest einem Teil der Blattrückstände in Kontakt gebracht wird, gibt und die beiden Verhältnisse im Wesentlichen gleich sind, und zwar auf das Trockengewicht bezogen.

10. Verfahren nach Anspruch 9,
wobei das Verhältnis ($W_E:W_C$) zwischen dem ersten Gewichtsverhältnis und dem zweiten Gewichtsverhältnis zwischen 2:1 und 1:2 liegt.

11. Verfahren nach einem der vorstehenden Ansprüche,
wobei der Blatttee schwarzer Blatttee ist.

12. Verfahren nach einem der vorstehenden Ansprüche,
wobei das Rollen der frischen Teeblätter im Schritt (b) das Leiten der frischen Teeblätter durch zumindest einen CTC-Prozess aufweist.

13. Verfahren nach einem der vorstehenden Ansprüche,
wobei die frischen Teeblätter vor dem Schritt (b) welken können.

14. Blatttee,
der nach dem Verfahren nach einem der Ansprüche 1 bis 13 erhalten wird.

**Revendications**

1. Procédé de fabrication de thé en feuilles, le procédé comprenant les étapes consistant à :

   a) fournir des feuilles de thé fraîches comprenant des catéchines ;
   b) faire macérer les feuilles de thé fraîches afin de produire un dhool ;
   c) faire fermenter le dhool pendant un premier temps de fermentation ($t_1$) suffisant pour réduire la teneur en catéchines dans le dhool à moins de 50 % de la teneur en catéchines dans les feuilles de thé fraîches avant macération sur une base de poids sec, avant d'extraire le jus du dhool de manière à produire des résidus de feuilles et du jus de thé ;
   d) mettre au moins une partie du jus de thé en contact avec au moins une partie des résidus de feuilles afin de produire un mélange de thé ; puis
   e) faire sécher le mélange de thé pour produire le thé en feuilles.

2. Procédé selon la revendication 1 dans lequel les résidus de feuilles fermentent pendant un second temps de fermentation ($t_2$) entre les étapes (c) et (d) et il y a un temps de fermentation total ($t_F$) qui est égal à la somme des premier et second temps de fermentation.

3. Procédé selon la revendication 2 dans lequel le temps de fermentation total ($t_F$) est au moins de 60 minutes.

4. Procédé selon la revendication 2 ou la revendication 3 dans lequel le premier temps de fermentation ($t_1$) est compris entre 20 et 70 % du temps de fermentation total ($t_F$).

5. Procédé selon la revendication 2 ou la revendication 3 dans lequel le premier temps de fermentation ($t_1$) est supérieur à 70 % du temps de fermentation total ($t_F$).

6. Procédé selon l'une quelconque des revendications précédentes dans lequel $t_1$ suffit pour réduire la quantité de catéchines dans le dhool à moins de 40 % de la teneur en catéchines dans les feuilles de thé fraîches sur une base de poids sec.

7. Procédé selon la revendication 6 dans lequel $t_1$ suffit pour réduire la quantité de catéchines dans le dhool à moins de 30 % de la teneur en catéchines dans les feuilles de thé fraîches sur une base de poids sec.

8. Procédé selon l'une quelconque des revendications précédentes dans lequel la quantité de jus extrait à l'étape (c) est comprise entre 50 et 500 ml par kg des feuilles de thé fraîches.

9. Procédé selon l'une quelconque des revendications précédentes dans lequel il y a un premier rapport de poids ($W_E$) de la quantité de jus de thé extrait à l'étape (c) sur la quantité des résidus de feuilles, et il y a un second rapport de poids ($W_C$) de la quantité de la au moins partie du jus de thé en contact avec la au moins partie des résidus de feuilles à l'étape (d), et les deux rapports sont sensiblement similaires sur une base de poids sec.

10. Procédé selon la revendication 9 dans lequel le rapport ($W_E$:$W_C$) du premier rapport de poids sur le second rapport de poids est compris entre 2:1 et 1:2.

11. Procédé selon l'une quelconque des revendications précédentes dans lequel le thé en feuilles est du thé noir en feuilles.

12. Procédé selon l'une quelconque des revendications précédentes dans lequel la macération des feuilles de thé fraîches à l'étape (b) comprend le passage des feuilles de thé fraîches par au moins un procédé CTC.

13. Procédé selon l'une quelconque des revendications précédentes dans lequel les feuilles de thé fraîches sont flétries avant l'étape (b).

14. Thé en feuilles obtenu par le procédé selon l'une quelconque des revendications 1 à 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009059927 A
- GB 0593260 A, Eric Howard Gridley
- SU 1153873 A
- SU 929041 B

**Non-patent literature cited in the description**

- Tea: Cultivation to Consumption. Chapman & Hall, 1992, vol. 14, 483-485